# FASCICULE DE BREVET EUROPEEN

(11) **EP 1 986 049 B1**
(45) Date de publication et mention de la délivrance du brevet: **27.01.2010**
(21) Numéro de dépôt: 08153871.2
(22) Date de dépôt: 31.03.2008
(51) Int. Cl.: G03B 35/24, G09F 19/14, A45D 44/00

(54) **Dispositif comportant un réseau lenticulaire**
Mit einem Linsenraster ausgestattete Vorrichtung
Device comprising a lenticular network

(30) Priorité: 24.04.2007 FR 0702954
(43) Date de publication de la demande: 29.10.2008
(73) Titulaire: L'Oréal, 75008 Paris (FR)
(72) Inventeur: Bazin, Roland, 91570, BIEVRES (FR)
(74) Mandataire: Tanty, François

(56) Documents cités:
- US-A- 4 351 591
- US-A- 4 561 850
- US-A- 5 695 346
- US-A1- 2005 152 041

## Description

La présente invention concerne un dispositif facilitant l'évaluation et/ou le conseil dans le domaine cosmétique, ainsi éventuellement que l'utilisation de certaines compositions.

La demande de brevet européen EP 1 216 658 A1 divulgue un procédé d'évaluation d'une caractéristique de la typologie corporelle.

Ce procédé est adapté à une mise en oeuvre par le biais de moyens informatiques, ce qui implique à tout le moins la disponibilité d'un terminal sur lequel les images peuvent être affichées.

La demande de brevet américain US 2005/0152041 décrit un procédé de fabrication d'images visibles au travers d'un réseau lenticulaire et pouvant figurer sur différents produits tels que, par exemple, un récipient, une tasse, une étiquette ou un emballage.

Le brevet américain US 5 695 346 décrit également un procédé de fabrication d'images visibles au travers d'un réseau lenticulaire.

Le brevet américain US 4 561 850 décrit un dispositif qui permet à un utilisateur de choisir la couleur de différents produits cosmétiques en fonction de la couleur de sa peau et de ses yeux.

L'invention vise à fournir de nouveaux outils à la disposition des consommateurs et professionnels pour faciliter l'évaluation d'une caractéristique de la typologie corporelle et/ou le choix d'un maquillage ou d'un traitement ou encore faciliter l'utilisation d'une composition ou d'un dispositif, entre autres.

L'invention a pour objet un dispositif comportant les caractéristiques de la revendication 1 :

L'invention permet de disposer d'un outil relativement peu coûteux et simple d'utilisation, pour de multiples applications en cosmétique.

L'expression « matières kératiniques » désigne la peau du corps ou du visage, les fibres kératiniques telles que les cheveux, les cils ou sourcils, les ongles et les lèvres.

Une image peut correspondre à un aspect local ou global, éventuellement agrandi ou diminué, d'une région plus ou moins étendue du corps ou du visage, l'image pouvant représenter par exemple seulement une partie du visage, le visage en entier et/ou une partie du corps, voire l'individu en entier.

Les images peuvent ne pas toutes être à la même échelle, étant par exemple à des grossissements différents.

L'évolution de l'aspect des matières kératiniques d'une image à l'autre, lorsque l'angle d'observation change, peut être progressive, avec par exemple affichage d'au moins une image intermédiaire dépourvue d'identifiant entre deux images comportant des identifiants.

Le système optique comporte avantageusement un réseau lenticulaire. Des données d'images, imprimées ou photographiques, correspondant aux images à observer au travers du réseau lenticulaire, sont disposées derrière le réseau lenticulaire. Les données d'image peuvent comporter un entrelacement de bandes d'images, l'entrelacement étant choisi en fonction des caractéristiques optiques du réseau lenticulaire.

Les lenticules du réseau lenticulaire concentrent la vue sur différentes parties des données d'image, ce qui permet de faire apparaître sélectivement les images en fonction de l'angle d'observation.

Les images peuvent représenter au moins deux degrés différents d'une caractéristique des matières kératiniques. Cette caractéristique est choisie par exemple parmi :
- les caractéristiques relatives au vieillissement telles que nombre et profondeur des rides, relâchement de la peau, notamment du cou, nombre et profondeur des plis, notamment du cou, plissement de la peau, profondeur des cernes, taux de cellulite, ptose, tâches cutanées de vieillissement,
- caractéristiques physiques ou morphologiques telles que nombre et taille des cornéoparticules de la peau, taux de sécrétion de sébum, taux de sécrétion de la sueur, sécheresse de la peau ou des lèvres, longueur, courbure ou densité des cils ou des cheveux, irrigation sanguine de la peau, défaut de pigmentation, densité de points noirs, de boutons d'acné, de couperose, grains de la peau, contour des lèvres,
- couleur de la peau ou des cheveux, typologie de la frange de cils ou d'autres parties du visage ou du corps, des dents, ou la couleur de lentilles oculaires, cette liste n'étant pas limitative.

Les images du dispositif peuvent permettre d'identifier au moins une image correspondant à un degré effectif ou souhaité par le sujet, l'image retenue étant destinée à servir par exemple d'objectif à atteindre à l'issu d'un traitement ou à apprécier l'efficacité d'un traitement.

Les différentes images peuvent représenter des maquillages différents du corps ou du visage, par exemple des maquillages différents des lèvres, des cils, ou des associations différentes de maquillages de diverses parties du visage et/ou du corps.

Les différentes images peuvent encore représenter divers modèles de coiffure ou différentes colorations des cheveux.

Le dispositif peut comporter plus de trois images, voire plus de dix images, par exemple entre dix et trente images.

L'identifiant présent sur une image au moins peut comporter au moins un caractère alphanumérique, par exemple un score lorsqu'il s'agit d'évaluer un degré d'une caractéristique de la typologie corporelle, un âge, notamment un âge apparent, une référence à un produit lorsque les images qui apparaissent correspondent par exemple à des applications de différents produits ou une durée, afin par exemple de montrer l'effet d'un traitement dans le temps.

L'identifiant peut également comporter un repère, par exemple une flèche, ce repère étant associé à une échelle qui peut être située hors du système optique.

Cette échelle peut comporter plusieurs valeurs de scores, d'âges ou de durée, ou des références à différents produits ou conditions d'utilisation des produits.

Le dispositif de l'invention comporte une ouverture permettant de juxtaposer des matières kératiniques et l'image observée sur le dispositif. Une telle ouverture peut par exemple être utile pour évaluer un aspect de la peau, en permettant d'observer la peau et une image à comparer à la portion de peau visible à travers l'ouverture.

Le dispositif de l'invention est associé à au moins une composition et l'identifiant peut renseigner sur l'utilisation de la composition.

Le dispositif peut être présent sur un emballage d'une composition cosmétique ou d'un complément alimentaire selon la revendication 9, afin par exemple de permettre une évaluation du sujet préalablement à l'utilisation de la composition ou du complément alimentaire, les conditions d'application et/ou la posologie pouvant dépendre par exemple de l'évaluation préalablement effectuée.

En variante, la présence du dispositif sur l'emballage peut renseigner l'utilisateur sur les effets du traitement dans le temps.

L'invention a encore pour objet, selon un autre de ses aspects, un procédé de fabrication selon la revendication 10.

La ou les images additionnelles peuvent être générées par synthèse d'images, par exemple par morphage, pour faire apparaître l'effet d'un traitement ou l'effet d'un maquillage, entre autres.

Ainsi, dans un exemple de mise en oeuvre de l'invention, à partir d'une image du visage d'un sujet, on génère plusieurs images correspondant à différents maquillages ou à différents traitements, voire à différents stades d'un traitement, ce qui peut aider le sujet à sélectionner un maquillage ou à décider ou non d'un traitement.

L'image initiale, reçue ou acquise sur le sujet, à partir de laquelle la ou les images additionnelles sont générées, peut faire partie des images du dispositif ou non et éventuellement peut être disposée hors du système optique.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 illustre l'affichage de différentes images avec les identifiants correspondants, dans un exemple de dispositif réalisé conforme à l'invention,
- la figure 2 est une coupe transversale schématique et partielle d'un réseau lenticulaire pouvant être utilisé comme système optique dans le dispositif de la figure 1,
- la figure 3 illustre l'utilisation du dispositif associé à un emballage,
- la figure 4 représente un autre exemple d'identifiants,
- la figure 5 illustre une chaîne de fabrication permettant de réaliser un dispositif personnalisé,
- les figures 6 et 7 représentent des exemples de dispositifs destinés à faciliter le choix d'une composition ou de conditions d'application,
- la figure 8 représente un exemple de dispositif de conditionnement et d'application pouvant être associé à un dispositif tel qu'illustré à la figure 7,
- les figures 9 et 10 représentent des exemples d'images avec lesquelles des exemples de dispositifs conformes à l'invention peuvent être réalisés, et
- la figure 11 représente un autre exemple de dispositif.

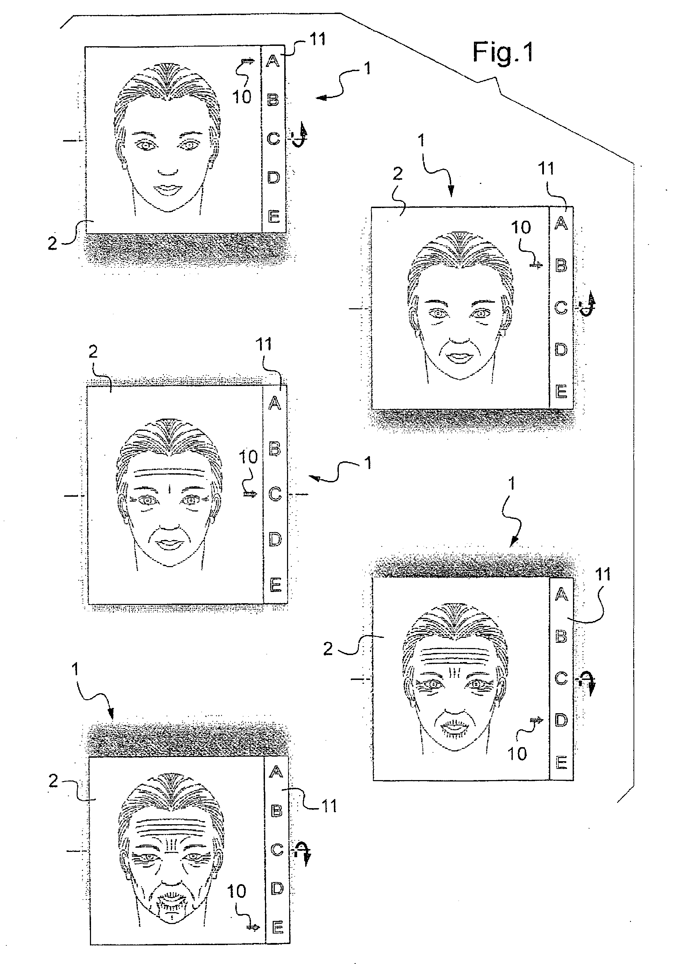

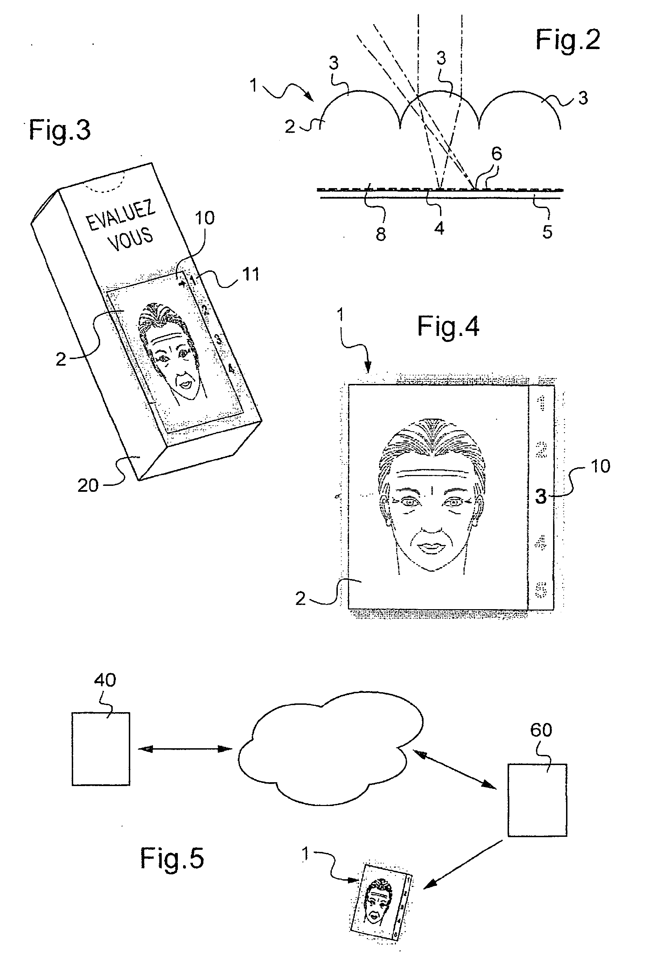

Le dispositif 1 représenté aux figures 1 et 2 comporte un réseau lenticulaire 2, de structure connue en soi, comportant une juxtaposition de lenticules 3 constitués par exemple chacun par une lentille cylindrique.

Le réseau lenticulaire 2 peut ainsi présenter une surface extérieure striée, le nombre de lenticules 3 par pouce étant par exemple supérieur ou égal à 50.

Les lentilles 3 du réseau lenticulaire 2 sont par exemple réalisées dans une couche 8 d'une matière thermoplastique transparente.

Cette couche 8 en matière plastique transparente peut présenter une face arrière 4 lisse et peut être fixée sur un substrat 5, par exemple une feuille de papier, sur laquelle ont été imprimées des données d'images sous la forme d'un entrelacement de bandes 6, cet entrelacement étant choisi en fonction des caractéristiques optiques du réseau lenticulaire de telle sorte que, pour une première direction d'observation, seules les données d'image correspondant à l'une des images à restituer apparaissent à l'observateur et pour d'autres directions d'observation, ce sont des données d'images différentes, associées à d'autres images à afficher, qui apparaissent.

Les réseaux lenticulaires sont en soi largement connus et variés et l'on pourra par exemple se reporter aux publications US 6751 024, US 6 414 794, US 6 781 761, US 6 984 425 ou US 6 795 250 qui divulguent d'autres exemples d'agencements.

Dans une variante non illustrée, les données d'image sont imprimées directement sur la face arrière de la couche en matière plastique transparente du réseau lenticulaire.

Le dispositif 1 peut être réalisé de manière à ce que, par exemple, entre trois et trente images puissent apparaître successivement lorsque l'on change l'angle d'observation du dispositif, comme illustré à la figure 1.

Chaque image peut comporter un identifiant qui permet à l'observateur de repérer l'image qu'il observe. En variante, seule une partie des images comporte un identifiant, les autres images en étant dépourvues et étant destinées par exemple à assurer une transition agréable à l'oeil entre les images avec identifiants.

Chaque identifiant est par exemple un repère 10 qui va se déplacer face à une échelle 11 du dispositif comportant d'autres indications, lorsque l'angle d'observation du dispositif change, comme illustré à la figure 1.

L'identifiant 10 peut encore être au moins un caractère alphanumérique, par exemple un score, comme illustré à la figure 4.

Un dispositif réalisé conformément à l'invention peut être utilisé sur un emballage 20, comme illustré à la figure 3, par exemple un conditionnement en carton.

Le cas échéant, la couche en matière plastique transparente du réseau lenticulaire peut être d'une seule pièce avec un récipient ou un boîtier contenant la composition.

Les images que l'on peut observer sur le dispositif peuvent être réalisées de différentes façons, étant par exemple des photographies réelles, des images de synthèse, des dessins ou un mélange de ceux-ci.

Par exemple, les images peuvent être générées au moins pour certaines par morphage afin de simuler l'évolution avec l'âge d'une ou plusieurs caractéristiques de la typologie corporelle.

Un exemple de simulation de l'apparence du visage avec l'âge est décrit dans la demande de brevet français déposée sous le n° 04 10323 publiée comme FR 2 875 930 A.

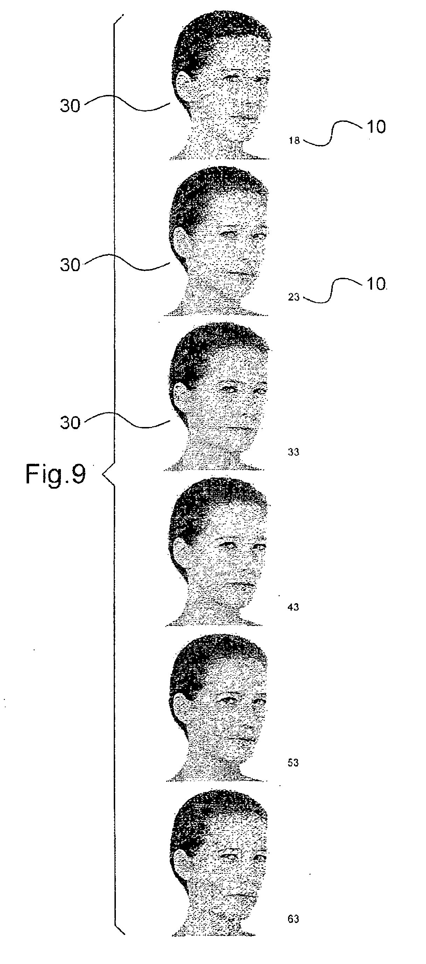

On a représenté à la figure 9 une séquence d'images 30 simulant le vieillissement du visage d'une femme, avec sur chacune de ces images un identifiant constitué par l'âge censé correspondre à l'apparence de la femme sur l'image.

Seules les images représentées à la figure 9 peuvent être décomposées en données d'image de manière à apparaître successivement lorsque l'angle d'observation du dispositif varie, grâce au réseau lenticulaire. En variante, on intercale entre les images représentées à la figure 9 d'autres images dépourvues des identifiants 10 et dans lesquelles les traits du sujet sont intermédiaires entre ceux des images les plus proches pourvues d'identifiants.

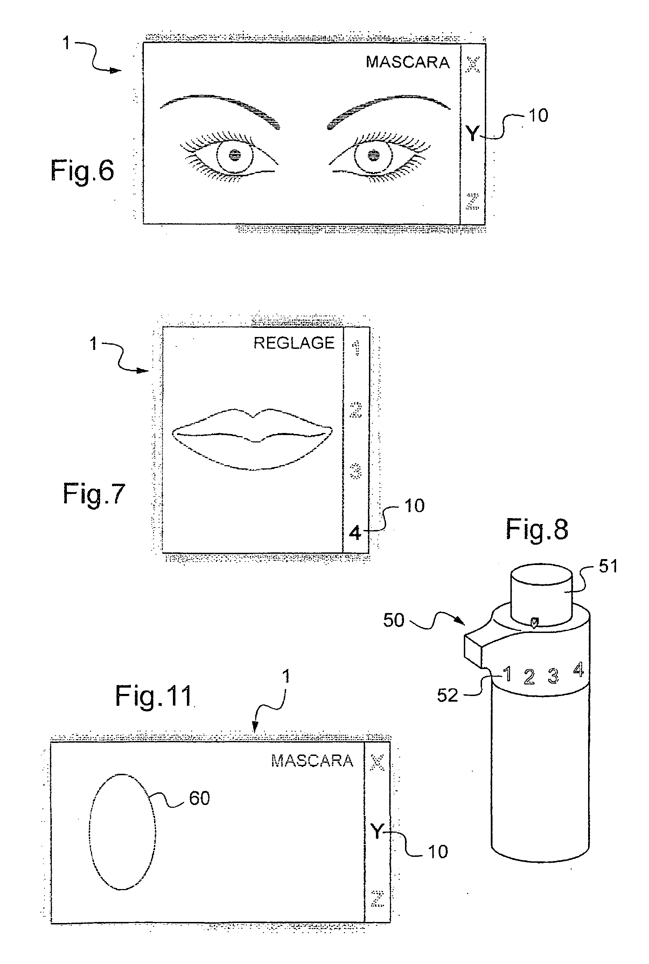

On a illustré à la figure 6 la possibilité d'utiliser le dispositif 1 pour faire apparaître plusieurs résultats de maquillage, par exemple de maquillage des yeux, l'identifiant renseignant par exemple sur la référence commerciale du mascara à utiliser pour obtenir le résultat affiché.

On a illustré à la figure 7 la possibilité de faire apparaître grâce au dispositif 1 plusieurs résultats de maquillage en fonction par exemple d'un réglage particulier d'un dispositif de conditionnement, tel que représenté par exemple à la figure 8. Ce dispositif de conditionnement 50 comporte par exemple un organe de réglage 51 qui permet de faire varier les proportions relatives de deux composants d'un produit cosmétique utilisé pour le maquillage, ce qui en change l'aspect.

Le dispositif 1 peut renseigner l'utilisateur sur l'aspect susceptible d'être obtenu pour différents réglages du dispositif 50, repérés par exemple par des identifiants 52 qui sont les mêmes que les identifiants 10 incorporés aux images susceptibles d'être visualisées grâce au dispositif 1.

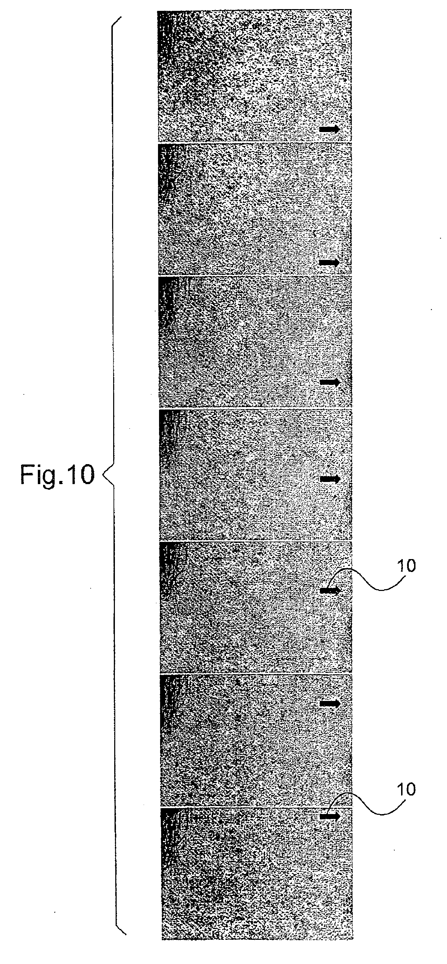

Sur la figure 10, on a illustré différents degrés de vieillissement de la peau, avec apparition de taches cutanées en fonction de l'âge.

Ces images peuvent être utiles pour permettre à l'observateur d'évaluer le degré de vieillissement de sa peau ou pour mieux comprendre l'apparition des signes du vieillissement et décider par exemple de l'application d'un soin pour retarder ou atténuer les effets du vieillissement.

Dans l'exemple de la figure 11, le dispositif comporte une ouverture 60 qui permet de visualiser une zone de peau sous-jacente. Les différentes images qui apparaissent en fonction de l'angle d'observation peuvent ainsi être comparées avec la zone de peau apparaissant à travers l'ouverture 60. Il peut s'agir par exemple de différentes couleurs de peau, les images étant par exemple réalisées avec des encres choisies pour minimiser le phénomène du métamérisme.

Le cas échéant, le dispositif selon l'invention peut être proposé au consommateur avec un outil de diagnostic permettant par exemple de solliciter mécaniquement, biologiquement ou chimiquement la peau, ou d'observer la peau sous un éclairage particulier ou avec un grossissement donné.

Le dispositif 1 peut être conditionné au sein d'un même emballage avec au moins une composition à appliquer sur la peau ou les cheveux ou avec au moins un complément alimentaire.

Dans un exemple de mise en oeuvre de l'invention, le dispositif est réalisé avec au moins une image reçue d'un sujet ou acquise sur celui-ci.

Par exemple, un consommateur peut transmettre, grâce à un terminal 40, à un site Internet une image de son visage et ce site peut transmettre l'image à une unité de fabrication 60, comme illustré à la figure 5.

Le terminal 40 est par exemple un caméraphone, une webcam, un appareil photo numérique ou une caméra vidéo. Dans une variante de mise en oeuvre de l'invention, une image de l'individu est adressée à l'unité de fabrication par courrier.

Dans une autre variante de l'invention, une image de l'individu est acquise par exemple sur un point de vente ou chez un professionnel et cette image peut être transmise à l'unité de fabrication. Celle-ci peut encore être présente sur le point de vente.

L'unité de fabrication 60 est configurée pour générer à partir de l'image reçue au moins une image additionnelle, par exemple par morphage, afin d'obtenir au final un dispositif 1 sur lequel l'utilisateur peut percevoir les effets d'un traitement ou les modifications d'aspect dus par exemple à différents types de maquillages, de coiffures ou de colorations.

L'image reçue peut ou non être intégrée au dispositif 1.

L'expression « comportant un » doit être comprise comme étant synonyme de « comportant au moins un », sauf si le contraire est spécifié.

## Revendications

1. Dispositif (1) comportant :
- plus de trois images représentant des aspects différents de matières kératiniques, chacune de ces images comportant un identifiant (10),
- un système optique (2) configuré pour faire apparaître successivement les différentes images, suite à un changement de l'angle d'observation du dispositif (1),
- une ouverture (60) permettant de juxtaposer des matières kératiniques et au moins une image observée sur le dispositif,
le dispositif étant associé à au moins une composition et l'identifiant renseignant sur l'utilisation de la composition.

2. Dispositif selon la revendication 1, le système optique comportant un réseau lenticulaire.

3. Dispositif selon l'une des revendications 1 et 2, les images représentant au moins deux degrés différents d'une caractéristique des matières kératiniques.

4. Dispositif selon la revendication 3, la caractéristique étant choisie parmi :
- les caractéristiques relatives au vieillissement telles que nombre et profondeur des rides, relâchement de la peau, notamment du cou, nombre et profondeur des plis, notamment du cou, plissement de la peau, profondeur des cernes, taux de cellulite, ptose, taches cutanées,
- caractéristiques physiques ou morphologiques telles que nombre et taille des cornéoparticules de la peau, taux de sécrétion de sébum, taux de sécrétion de la sueur, sécheresse de la peau ou des lèvres, longueur, courbure ou densité des cils ou des cheveux, irrigation sanguine de la peau, défaut de pigmentation, densité de points noirs, de boutons d'acné, de couperose, grains de la peau, contour des lèvres,
- couleur de la peau ou des cheveux, la typologie de la frange de cils ou d'une autre région du visage ou du corps, des dents ou la couleur de lentilles oculaires.

5. Dispositif selon l'une des revendications 1 à 2, les différentes images représentant des maquillages différents du corps ou du visage.

6. Dispositif selon l'une des revendications 1 à 5, comportant plus de dix images.

7. Dispositif selon l'une quelconque des revendications 1 à 6, l'identifiant (10) comportant au moins un caractère alphanumérique.

8. Dispositif selon l'une quelconque des revendications 1 à 7, l'identifiant (10) comportant un repère associé à une échelle (11) située hors du système optique.

9. Emballage (20) d'une composition cosmétique ou d'un complément alimentaire comportant un dispositif (1) selon l'une quelconque des revendications 1 à 8.

10. Procédé de fabrication d'un dispositif (1) comportant :
- au moins trois images représentant des aspects différents de matières kératiniques, chacune de ces images comportant un identifiant (10), le dispositif étant associé à au moins une composition et l'identifiant renseignant sur l'utilisation de la composition,
- une ouverture (60) permettant de juxtaposer des matières kératiniques et au moins une image observée sur le dispositif,
- un système optique (2) configuré pour faire apparaître successivement les différentes images, suite à un changement de l'angle d'observation du dispositif (1), dans lequel :
- on reçoit d'un sujet au moins une image de matières kératiniques de celui-ci ou on procède à l'acquisition d'au moins une image de matières kératiniques de ce sujet,
- on génère sur la base au moins de l'image ainsi reçue ou acquise au moins une image additionnelle.
- on réalise le dispositif (1) comportant au moins l'image additionnelle ainsi générée.

11. Procédé selon la revendication 10, la ou les images additionnelles étant générées par synthèse d'images.

12. Procédé selon la revendication 10, dans lequel on génère plusieurs images correspondant à différents maquillages ou à différents traitements ou stades d'un traitement.

## Claims

1. A device (1) comprising:
• more than three images showing different appearances of keratinous materials, each of the images including an identifier (10); and
• an optical system (2) that is configured to make the different images appear in succession as a result of a change in the angle of observation of the device (1),
• an opening (60) making it possible to juxtapose keratinous materials and at least one image that is observed on the device,
the device being associated with at least one composition and the identifier giving information about the use of the composition.

2. A device according to claim 1, the optical system including a liens array.

3. A device according to any one of claims 1 and 2, the images showing at least two different degrees of a characteristic of the keratinous materials.

4. A device according to claim 3, the characteristic being selected from:
• characteristics relating to aging such as: number and depth of wrinkles; sagging of the skin, in particular of the neck; number and depth of folds, in particular of the neck; creasing of the skin; depth of dark rings; level of cellulite; ptosis; and blemishes on the skin;
• physical or morphological characteristics such as: number and size of corneoparticles of the skin; sebum secretion level; sweat secretion level; dryness of the skin or the lips; length, curvature, or density of the eyelashes or the hair; blood supply of the skin; pigmentation defect; density of blackheads; acne; blotches; moles; outline of the lips; and
• color of the skin or of the hair; typology of the eyelashes or of another region of the face or of the body; color of the teeth; or color of eye lenses.

5. A device according to any one of claims 1 and 2, the different images showing different makeup effects for the body or for the face.

6. A device according to any one of claims 1 to 5, including more than ten images.

7. A device according to any one of claims 1 to 6, the identifier (10) including at least one alphanumeric character.

8. A device according to any one of claims 1 to 7, the identifier (10) comprising a marker that is associated with a scale (11) that is situated outside the optical system.

9. A package (20) for packaging a cosmetic composition or a food supplement including a device (1) according to any one of claims 1 to 8.

10. A method of manufacturing a device (1) comprising:
• at least three images showing different appearances of keratinous materials, each of the images including an identifier (10); the device being associated with at least one composition and the identifier giving information about the use of the composition,
• an opening (60) making it possible to juxtapose keratinous materials and at least one image that is observed on the device,
• an optical system (2) that is configured to make the different images appear in succession as a result of a change in the angle of observation of the device (1); in which method:
• at least one image of keratinous materials of a subject is received from said subject, or at least one image of keratinous materials of said subject is acquired;
• at least one additional image is generated at least on the basis of the image thus received or acquired; and
• the device (1) is produced including at least the additional image thus generated.

11. A method according to claim 10, the additional image(s) being generated by image synthesis.

12. A method according to claim 10, in which a plurality of images are generated that correspond to different makeup effects or to different treatments or stages of a treatment.

## Patentansprüche

1. Vorrichtung (1), die aufweist:
- mehr als drei Bilder, die Aspekte verschiedener keratinartiger Materialien darstellen, wobei jedes dieser Bilder ein Kennzeichen (10) aufweist,
- ein optisches System (2), das konfiguriert ist, um nacheinander die verschiedenen Bilder erscheinen zu lassen, je nach einer Änderung des Beobachtungswinkels der Vorrichtung (1),
- wobei eine Öffnung (60) die Gegenüberstellung der keratinartigen Materialien und mindestens eines beobachteten Bildes auf der Vorrichtung ermöglicht,
- wobei die Vorrichtung mit zumindest einer Zusammensetzung und dem Kennzeichen, das über die Verwendung der Zusammensetzung informiert, verbunden ist.

2. Vorrichtung nach Anspruch 1, wobei das optische System ein Linsennetzwerk bzw. -System aufweist.

3. Vorrichtung nach einem der Ansprüche 1 und 2, wobei die Bilder zumindest zwei verschiedene Grade einer Charakteristik von keratinartigen Materialien darstellen.

4. Vorrichtung nach Anspruch 3, wobei die Charakteristik ausgewählt wird durch:
- die Charakteristiken relativ zu der Alterung, wie etwa der Anzahl und der Tiefe von Runzeln, der Erschlaffung der Haut, insbesondere des Halses, der Anzahl und der Tiefe von Falten, insbesondere des Halses, der Faltenbildung der Haut, der Tiefe der Augenringe, der Quote der Cellulite, der Ptose von Hautflecken,
- physische oder morphologische Charakteristiken, wie etwa der Anzahl und der Größe der Hornhautpartikel der Haut, des Verhältnisses der Talgsekretion, des Verhältnisses der Schweißsekretion, der Trockenheit der Haut oder der Lippen, der Länge, der Wölbung und der Dichte von Wimpern oder der Haare, der Oberflächendurchblutung der Haut, von Pigmentationsfehlern, der Dichte der Mitessern, von Aknepickeln, von Kupferausschlag, von Hautkörnungen, der Kontur der Lippen,
- der Farbe der Haut oder der Haare, der Typologie des Wimpernsaumes oder eines anderen Bereiches des Gesichtes oder des Körpers, der Zähne oder der Farbe der Augenlinsen.

5. Vorrichtung nach einem der Ansprüche 1 bis 2, wobei die verschiedenen Bilder verschiedene Aufmachungen bzw. Make-ups des Körpers oder des Gesichtes darstellen.

6. Vorrichtung nach einem der Ansprüche 1 bis 5, die mehr als zehn Bilder aufweist.

7. Vorrichtung nach einem der Ansprüche 1 bis 5, wobei das Kennzeichen bzw. die Person (10) wenigstens ein alphanumerisches Charakteristikum aufweist.

8. Vorrichtung nach einem der Ansprüche 1 bis 6, wobei das Kennzeichen bzw. die Person (10) ein Merkzeichen aufweist, das mit einer Abstufung (11) verknüpft ist, die außerhalb des optischen Systems angeordnet ist.

9. Verpackung bzw. Aufmachung (20) einer kosmetischen Zusammensetzung oder einer Nahrungsergänzung, die eine Vorrichtung (1) nach irgendeinem der Ansprüche 1 bis 8 aufwei st.

10. Verfahren zur Herstellung einer Vorrichtung (1), die aufweist:
- mindestens drei Bilder, die verschiedene Aspekte von keratinartigen Materialien darstellen, wobei jedes dieser Bilder ein Kennzeichen (10) aufweist, wobei die Vorrichtung mit zumindest einer Zusammensetzung oder einem Kennzeichen, das über die Verwendung der Zusammensetzung informiert, verbunden ist,
- eine Öffnung (60), die die Gegenüberstellung von keratinartigen Materialien und zumindest einem Bild, das durch die Vorrichtung beobachtet wird, ermöglicht;
- ein optisches System (2), das konfiguriert ist, um aufeinander folgend die verschiedenen Bilder, in Folge einer Änderung des Beobachtungswinkels der Vorrichtung (1) erscheinen zu lassen, bei welchem:
- zumindest ein Bild von keratinartigen Materialien eines Subjektes empfangen wird oder die Beschaffung von zumindest einem Bild von keratinartigen Materialien des Subjektes durchgeführt wird,
- auf der Grundlage von zumindest dem bereits empfangenen oder erhaltenen Bild mindestens ein zusätzliches Bild erzeugt wird,
- die Vorrichtung (1) die zumindest das Bild, das zusätzlich derart erzeugt worden ist, realisiert wird.

11. Verfahren nach Anspruch 10, wobei das oder die zusätzlichen Bilder durch Bildsynthese erzeugt worden sind.

12. Verfahren nach Anspruch 10, bei welchem zusätzliche Bilder erzeugt werden, die verschiedenen Aufmachungen bzw. Make-ups oder verschiedenen Behandlungen oder Stadien einer Behandlung entsprechen.
